# EUROPEAN PATENT APPLICATION

(11) **EP 1 931 059 A2**
(43) Date of publication of application: **11.06.2008**
(21) Application number: 07122334.1
(22) Date of filing: 05.12.2007
(51) Int. Cl.: H04B 7/08, H04N 5/44

(54) **High-frequency signal receiver using diversity antenna, and high-frequency signal receiving apparatus using the same**

(30) Priority: 07.12.2006 JP 2006330200
(71) Applicant: Matsushita Electric Industrial Co., Ltd., Kadoma-shi Osaka 571-8501 (JP)
(72) Inventor: Fujishima, Akira, Osaka 540-6207 (JP); Kitazawa, Keiichi, Osaka 540-6207 (JP); Kitamura, Hirokazu, Osaka 540-6207 (JP)
(74) Representative: Grünecker, Kinkeldey, Stockmair & Schwanhäusser Anwaltssozietät

(57) **Abstract**

The object of the present invention is to provide a high-frequency signal receiving apparatus using a high-frequency signal receiver which performs diversity control by using tuners, wherein the first tuner comprises a first high frequency amplifier gain-controlled by the first gain controller, and a first amplifier gain-controlled by the second gain controller, and the second tuner comprises a second high frequency amplifier gain-controlled by the third gain controller, and a second amplifier gain-controlled by the fourth gain controller, and there is provided a receiving quality detector capable of detecting receiving quality, to which the outputs of the first gain controller, second gain controller, the third gain controller, and the fourth gain controller are connected, and single receiving or diversity receiving is selected by using the detection signal outputted from receiving quality detector .

## Description

### Technical Field

The present invention relates to a high-frequency signal receiver using a diversity antenna, and a high-frequency signal receiving apparatus using the same.

### Background Art

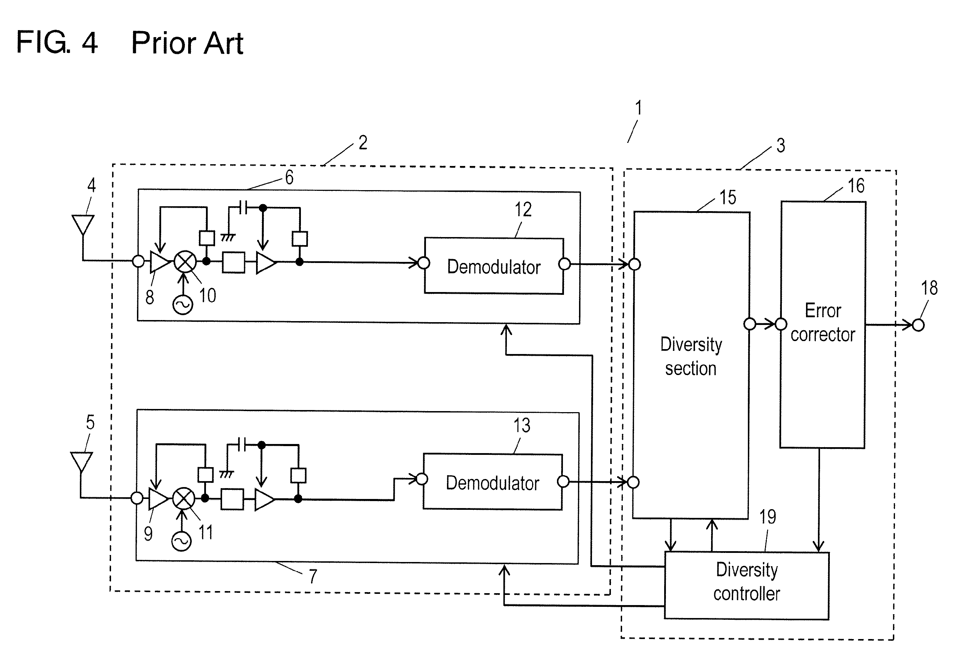

Fig. 4 is a block diagram of a conventional high-frequency signal receiving apparatus. In Fig. 4, high-frequency signal receiving apparatus 1 comprises high-frequency signal receiver 2, and receiving quality controller 3 connected to high-frequency signal receiver 2. Also, high-frequency signal receiver 2 comprises tuners 6, 7.

Tuners 6, 7 comprise high-frequency amplifiers 8, 9 to which TV broadcasting signals from antennas 4, 5 are respectively inputted, mixers 10, 11 to which output signals from these high-frequency amplifiers 8, 9 are respectively supplied, and demodulators 12, 13 to which output signals from these mixers 10, 11 are respectively supplied.

Receiving quality controller 3 comprises diversity section 15 to which the output from demodulators 12, 13 is supplied, error corrector 16 to which the output of diversity section 15 is supplied, output terminal 18 to which the output of error corrector 16 is supplied, and diversity controller 19 connected between diversity section 15, error corrector 16, and tuners 6, 7.

The operation of high-frequency signal receiving apparatus 1 having the above configuration will be described in the following. TV broadcasting signals inputted from antennas 4, 5 are respectively supplied to tuners 6, 7, and controlled to a stable signal level and converted to a predetermined frequency. The converted signals are inputted to demodulators 12, 13 respectively for the purpose of demodulation. The demodulated signals respectively outputted from demodulators 12, 13 are separately inputted to diversity section 15.

In diversity section 15, a sub-carrier signal forming a digital signal is detected, and the sub-carrier signal is supplied to diversity controller 19. Diversity controller 19 activates either one of tuners 6, 7 to create a single receiving mode when the sub-carrier detection signal is normal. Also, when the sub-carrier detection signal is abnormal, both of tuners 6, 7 are activated to create a diversity receiving mode. In this way, it is possible to assure the receiving quality.

Also, in the case of detecting the receiving quality, the bit error rate (hereinafter called BER) signal of the error corrector can be used. As preceding technical document information related to this invention, for example, Japanese Laid-open Patent 2001-156738 is commonly known.

In such a conventional high-frequency signal receiving apparatus, the receiving quality is detected by using BER or sub-carrier detection signal. However, much time is required for signal processing with use of BER or sub-carrier signal. As a result, for example, single receiving and diversity receiving cannot be smoothly changed over during high-speed travel, and it is unable to assure the receiving quality.

### Summary of the Invention

The present invention smoothly performs in a short time between single receiving and diversity receiving.

The high-frequency signal receiver of the present invention comprises a receiving quality detector to which the outputs of the first and third gain controllers are connected, and a third output terminal to which the detection signal from the receiving quality detector is outputted, wherein a single receiving or diversity receiving is selected by the detection signal outputted from the third output terminal.

In this way, it is possible to immediately detect the receiving quality by using the gain control voltages respectively outputted from the first and third gain controllers. Accordingly, even in case the receiving condition varies during at a high speed travel, it is possible to smoothly perform changeover between single receiving and diversity receiving.

### Brief Description of the Drawings

Fig. 1 is a block diagram of a high-frequency signal receiving apparatus in the preferred embodiment 1 of the present invention.
Fig. 2 is an explanatory diagram showing the relationship between the desired signal and interference signal input levels and BER in the preferred embodiment 1 of the present invention.
Fig. 3 is a flow chart showing the selecting operation of the diversity controller in the high-frequency signal receiving apparatus in the preferred embodiment 1 of the present invention.
Fig. 4 is a block diagram of a conventional high-frequency signal receiving apparatus.

### Detailed Description of the Preferred Embodiments

### (Preferred embodiment 1)

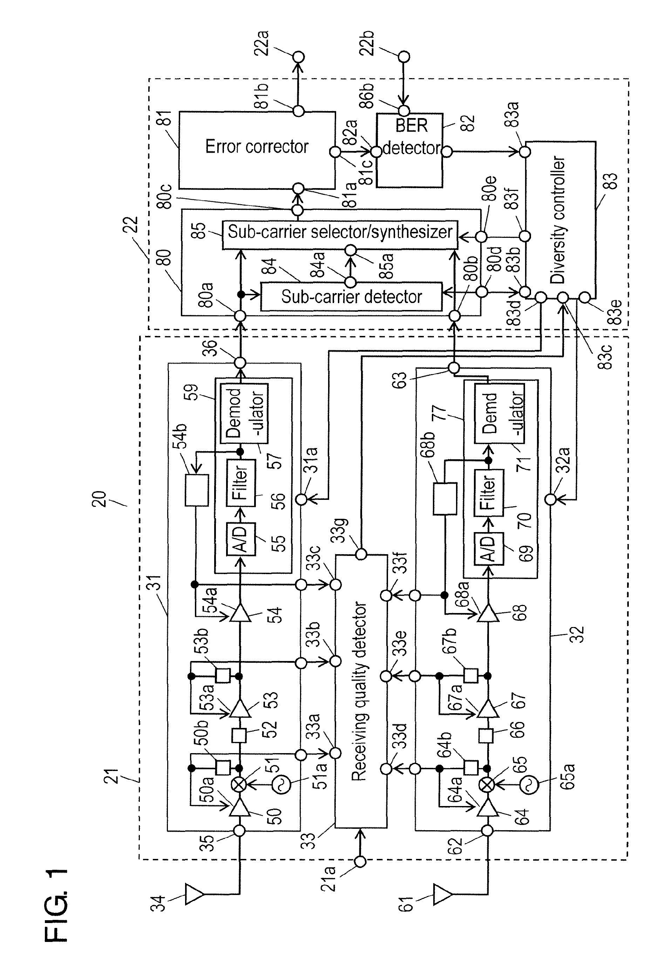

Fig. 1 is a block diagram of a high-frequency signal receiving apparatus in the preferred embodiment 1 of the present invention. In Fig. 1, high-frequency signal receiving apparatus 20 comprises high-frequency signal receiver 21 and receiving quality controller 22.

High-frequency signal receiver 21 is provided with tuner 31, tuner 32, and receiving quality detector 33 connected between tuner 31 and tuner 32.

Tuner 31 is provided with high frequency amplifier 50, mixer 51, intermediate frequency filter 52, amplifier 53, amplifier 54, A/D converter 55, filter 56, and demodulator 57 in the order from input terminal 35 to which antenna 34 is connected toward output terminal 36.

Also, the output of oscillator 51a is connected to the other input of mixer 51. Further, demodulation section 59 is formed by A/D converter 55, filter 56, demodulator 57.

And, gain controller 50b for gain control is connected between the output of mixer 51 and gain control input 50a disposed in high frequency amplifier 50. Gain controller 53b for gain control is connected between the output of amplifier 53 and gain control input 53a disposed in amplifier 53. Gain controller 54b is connected between the output of filter 56 and gain control input 54a for gain control which is disposed in amplifier 54.

Also, tuner 32 is provided with high frequency amplifier 64, mixer 65, intermediate frequency filter 66, amplifier 67, amplifier 68, A/D converter 69, filter 70, and demodulator 71 in the order from input terminal 62 to which antenna 61 is connected toward output terminal 63. The output of oscillator 65a is connected to the other input of mixer 65. Demodulation section 77 is formed by A/D converter 69, filter 70, demodulator 71.

And, gain controller 64b for gain control is connected between the output of mixer 65 and gain control input 64a disposed in high frequency amplifier 64. Gain controller 67b for gain control is connected between the output of amplifier 67 and gain control input 67a disposed in amplifier 67. Gain controller 68b is connected between the output of filter 70 and gain control input 68a for gain control which is disposed in amplifier 68.

And, receiving quality detector 33 is provided with input terminals 33a, 33b, 33c, 33d, 33e, 33f. These terminals 33a, 33b, 33c, 33d, 33e, 33f are respectively connected with gain control inputs 50a, 53a, 54a, 64a, 67a, 68a.

Receiving quality controler 22 comprises diversity section 80, error corrector 81, BER detector 82, and diversity controller 83.

Diversity section 80 comprises input terminal 80a to which output terminal 36 is connection, input terminal 80b to which output terminal 63 is connected, and output terminal 80c connected to input terminal 81a of error corrector 81.

Diversity section 80 is provided with sub-carrier detector 84 connected between input terminals 80a and 80b, and sub-carrier selector/synthesizer 85 to which input terminals 80a, 80b are respectively connected. Also, output 84a of sub-carrier detector 84 is connected to input 85a of sub-carrier selector/synthesizer 85. And, the output of sub-carrier selector/synthesizer 85 is connected o input terminal 81a of error corrector 81 via output terminal 80c of diversity section 80.

Output terminal 81b of error corrector 81 is connected to TS output terminal 22a. Also, BER output from output terminal 81c of error corrector 81 is inputted to input terminal 82a of BER detector 82. Also, input 86b of BER detector 82 is connected to BER reference input terminal 22b to which external reference signal is inputted. Due to BER reference signal input terminal 22b, setting to optional value of reference signal can be made, and it is possible to optimize the receiving quality detection standard.

Further, diversity controller 83 is provided with input terminals 83a, 83b, 83c. Detection signal outputted from BER detector 82 is supplied to input terminal 83a. Sub-carrier detection signal outputted from output terminal 80d is supplied to input terminal 80b of diversity section 80. Detection signal outputted from output terminal 33g of receiving quality detector 33 is supplied to input terminal 83c.

Also, diversity controller 83 is provided with output terminals 83d, 83e, 83f. Output terminals 83d, 83e are respectively connected to power input terminals 31a, 32a for supply voltage application which are disposed in tuners 31, 32. The signal outputted from output terminal 83f for controlling diversity section 80 is supplied to input terminal 80e of diversity section 80.

The operation of high-frequency signal receiving apparatus 20 having the above configuration will be described with reference to Fig. 1.

Digital broadcasting signal recently introduced is lowered in transmission output level so as to avoid influences to the existing analog broadcasting signal. For example, there is a possibility such that digital broadcasting signal being an desired signal causes the received signal level to become higher by nearly 40dB than analog broadcasting signal being an interference signal. For example, when the received signal level of 13ch for digital broadcast is - 50 dBm, the received signal level of 25ch for analog broadcast may sometimes become - 10 dBm.

That is, when a digital broadcasting signal is received, it is interfered by an analog broadcasting signal of higher level, causing distortion to be generated at high-frequency receiver 21 for example, and it is unable to obtain normal signal receiving.

Particularly, since the interference signal is not sufficiently suppressed before filter 52, distortion is generated due to an interference signal of higher level in amplifier circuit 50, mixer 51.

On the other hand, when a digital broadcasting signal is received in a suburb, there arises a problem of receiving sensitivity of high-frequency signal receiving apparatus 20, that is, it is unable to obtain normal signal receiption.

For improving the receiving quality, it is possible to realize the improvement by performing changeover from single receiving to diversity receiving.

Diversity receiving is such that both of tuners 31, 32 are operated and, at the same time, demodulation signals respectively outputted from tuners 31, 32 are synthesized in diversity section 80 before signal receiving. Also, single receiving is such that either one of tuner 31 and tuner 32 is operated before signal receiving.

Firstly, diversity receiving is described. Supply voltages from output terminals 83d, 83e of diversity controller 83 are supplied to power input terminals 31a, 32a of tuners 31, 32. And, same tuning data is delivered to tuners 31, 32 before start of receiving operation.

And, TV broadcasting signal inputted from antenna 34 is inputted to high frequency amplifier 50 via input terminal 35 of tuner 31. In high frequency amplifier 50, gain control is performed so that the output level of mixer 51 is kept constant by gain controller 50b.

The output signal from high frequency amplifier 50 and the output of oscillator 51a are inputted to mixer 51. For the intermediate frequency signal outputted from mixer 51, interference signal is suppressed by interference frequency filter 52. The output signal from intermediate frequency filter 52 is inputted to amplifier 53. In amplifier 53, gain control is performed so that the output level of amplifier 53 is kept constant by gain controller 53b.

The intermediate frequency signal outputted from amplifier 53 is inputted to amplifier 54. In amplifier 54, gain control is performed by gain controller 54b so that the input level to demodulator 57 is kept constant.

Further, the output signal from amplifier 54 is converted from analog signal to digital signal by A/D converter 55. For the digital signal, interference signal is suppressed by filter 56. The output signal of filter 56 is demodulated by demodulator 57. The transport stream (hereinafter called TS) signal outputted from amplifier 57 is outputted from output terminal 36.

Similarly, the TV broadcasting signal inputted from antenna 61 is inputted to high frequency amplifier 64 via input terminal 62 of tuner 32. In high frequency amplifier 64, gain control is performed so that the output level of mixer 65 is kept constant by gain controller 64b.

Also, both of the output signal from high frequency amplifier 64 and the output of oscillator 65a are inputted to mixer 65. For the intermediate frequency signal outputted from mixer 65, interference signal is suppressed by intermediate frequency filter 66. The output signal from intermediate frequency filter 66 is inputted to amplifier 67. For amplifier 67, gain control is performed so that the output level of amplifier 67 is kept constant by gain controller 67b.

The intermediate frequency signal outputted from amplifier 67 is inputted to amplifier 68. For amplifier 68, gain control is performed by gain controller 68b so that the input level to demodulator 71 is kept constant.

Further, the output signal of amplifier 68 is converted from analog signal to digital signal by A/D converter 69. For the digital signal, interference signal is suppressed by filter 70. The output signal from filter 70 is demodulated by demodulator 71. The demodulation signal outputted from demodulator 71 is outputted from output terminal 63.

Demodulation signals outputted from output terminals 36, 63 are respectively inputted to input terminals 80a, 80b of diversity section 80.

In diversity section 80, the signal quality of sub-carrier contained in two demodulation signals is detected by sub-carrier detector 84. In accordance with the signal quality information then detected, the weighting coefficient is calculated with respect to each sub-carrier. The weighting efficiency is inputted from output 84a of sub-carrier detector 84 to input 85a of sub-carrier selector/synthesizer 85.

Further, as to each sub-carrier, in sub-carrier selector/synthesizer 85, the sub-carrier synthesized signal with it multiplied by the weighting coefficient is outputted from output terminal 80c. Thus, the synthesized signal is improved in C/N two times max. by the weighting coefficient.

And, the sub-carrier synthesized signal is inputted to input terminal 81a of error corrector 81. The error-corrected TS signal is outputted from output terminal 81b of error corrector 81. In this way, the error-corrected signal improved in C/N two times max. is outputted from output terminal 22a, thereby improving the receiving quality.

It is preferable to use C/N detector which can detect C/N (carrier vs. noise) in place of BER detector 82.

Next, changeover from diversity receiving to single receiving through control of diversity controller 83 will be described in the following. In single receiving, for example, tuner 31 is in a state of operation, and tuner 32 is in a state of non-operation.

The operation of changeover from diversity receiving to single receiving is controlled by diversity controller 83. That is, input terminals 83a, 83b, 83c of diversity controller 83 respectively receive the BER detection signal outputted from BER detector 82, sub-carrier detection signal outputted from diversity section 80, and receiving quality detection signal outputted from receiving quality detector 33 (described later). It is possible to detect the receiving quality by using at least one of the three detection signals.

In accordance with the receiving quality detection, the supply voltage is outputted from only one of output terminals 83d, 83e of diversity controller 83, and therefore, for example, one tuner 32 is shifted from operation mode to non-operation mode, and the other tuner 31 is shifted to operation mode.

As a result, demodulation signal outputted from tuner 31 is inputted to terminal 80a of diversity section 80. On the other hand, no demodulation signal is inputted to input terminal 80b. Demodulation signal outputted from output terminal 80c of diversity section 80 is inputted to input terminal 81a of error corrector 81, and corrected TS signal is outputted from output terminal 22a.

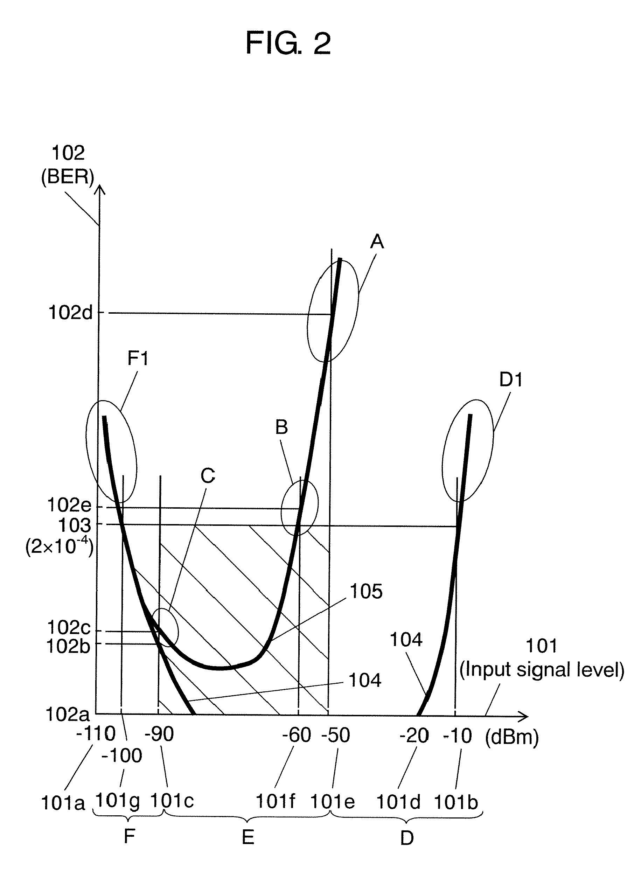

Fig. 2 is an explanatory diagram showing the relationship between the desired signal, interference signal input level, and BER of a high-frequency signal receiving apparatus in the preferred embodiment 1 of the present invention. That is, the diagram shows the relationship between input signal level 101 and BER 102 in input terminal 35 of high-frequency signal receiving apparatus 20 for single receiving. In Fig. 2, BER 102a stands for error-free (generating no error). BER 103 is a reference value (2 x 10 ⁻⁴) for determining the receiving quality, and when greater than this reference value, it is determined that the receiving quality is bad.

In this high-frequency signal receiving apparatus 20, for example, the gain control of high frequency amplifier 50 ranges from 0 to - 50 dBm (value at input terminal 35). The gain control of amplifier 53 ranges from - 50 dBm to - 90 dBm (value at input terminal 35). The gain control range of amplifier 54 less than - 90 dBm (value at input terminal 35). Also, the ranges of gain control can be changed to optimum ranges according to the gain and distortion of high frequency amplifier 50, amplifiers 53, 54, mixer 51 and the like.

Characteristic curve 104 represents BER in the case of receiving only the desired signal. In characteristic curve 104, when a desired signal of input signal level 101b (around - 10 dBm) is inputted, it is regarded as extra-strong electric field receiving level, that is, receiving condition D1. When a desired signal of higher than input signal level 101e (- 50 dBm) is inputted, it is regarded as strong electric field receiving level, that is, receiving condition D. When a desired signal of input signal level 101e (-50 dBm) to input signal level 101c (- 90 dBm) is inputted, it is regarded as medium electric field receiving level, that is, receiving condition E. When a desired signal of input signal level 101c (- 90 dBm) to input signal level 101g (- 100 dBm) is inputted, it is regarded as weak electric field receiving level, that is, receiving condition F. When a desired signal of input signal level 101a (around - 110 dBm) is inputted, it is regarded as very weak electric field receiving level, that is, receiving condition F1.

For example, in the case of input signal level 101c (- 90 dBm) of receiving condition F, the BER is 102b, and in the case of input signal level 101a (- 110 dBm), the BER is further deteriorated. This is due to the fact that the signal received by antenna 34 is very weak, and further, due to the noise index of tuner 31.

Also, in the case of input signal level higher than input signal level 101d (- 20 dBm) of receiving condition D, the BER is deteriorated. This is because a very high level of desired signal is inputted to tuner 31, resulting in generation of distortion. Particularly, in case a signal of higher than input signal level 101b (- 10 dBm) is inputted, the influence of distortion due to high frequency amplifier 50 or mixer 51 will be very great.

Characteristic curve 105 represents BER in the case of receiving a desired signal and an interference signal nearly 40dB greater than the desired signal. Characteristic 105 is described in the following.

In receiving condition C, great interference signal (- 50 dBm) is inputted along with a desired signal of input signal level 101c (around - 90 dBm). In this case, it is deteriorated from BER 102b to BER 102c due to the interference signal (- 50 dBm).

In receiving condition B, great interference signal (- 20 dBm) is inputted along with a desired signal of input signal level 101f (- 60 dBm). In this case, it is deteriorated from BER 102a or less to BER 102e due to the interference signal (- 20 dBm).

In receiving condition A, great interference signal (- 10 dBm) is inputted along with a desired signal of input signal level 101e (- 50 dBm). In this case, it is deteriorated to BER 102d due to the interference signal (-10 dBm).

That is, since an interference signal greater by 40dB than the desired signal is inputted, the gain is controlled by the interference signal in high frequency amplifier 50, and the gain is controlled with respect to the desired signal as well. Consequently, the noise index of high frequency amplifier 50 becomes extremely great, and it causes deterioration of the ratio of noise signal level to desired signal level. Or, distortion is generated in high frequency amplifier 50 and mixer 51 due to such a great interference signal.

As described above, the BER worsens in the cases of receiving condition F1 for desired signal input of a very weak electric field receiving level, receiving condition D1 for desired signal input of strong electric field receiving level, and receiving conditions A, B for great interference signal input to the desired signal. The BER can be compared with the reference value for BER (2 x 10⁻⁴) by using BER detector 82.

However, for the detection of BER by using BER detector 82, it requires a long length of time for signal processing although the detection accuracy is very high. Also, in the case of detecting the quality of sub-carrier signal in diversity section 80, it requires a long length of time for signal processing.

As a result, in the conventional high-frequency signal receiving apparatus, it is unable to perform sufficient detection during high-speed travel. Also, it is difficult to detect whether the receiving quality is deteriorated due to great desired signal, very weak desired signal, or great interference signal.

On the other hand, the high-frequency signal receiving apparatus of the present invention comprises receiving quality detector 33 capable of detecting whether the receiving quality is deteriorated due to a specific receiving condition even during high-speed travel. The operation of receiving quality detector 33 is described in the following.

Table 1 shows the status of gain control of high frequency amplifier 50, amplifier 53, 54 of high-frequency signal receiving apparatus 20 in the cases of receiving conditions A to F, D1, F1.

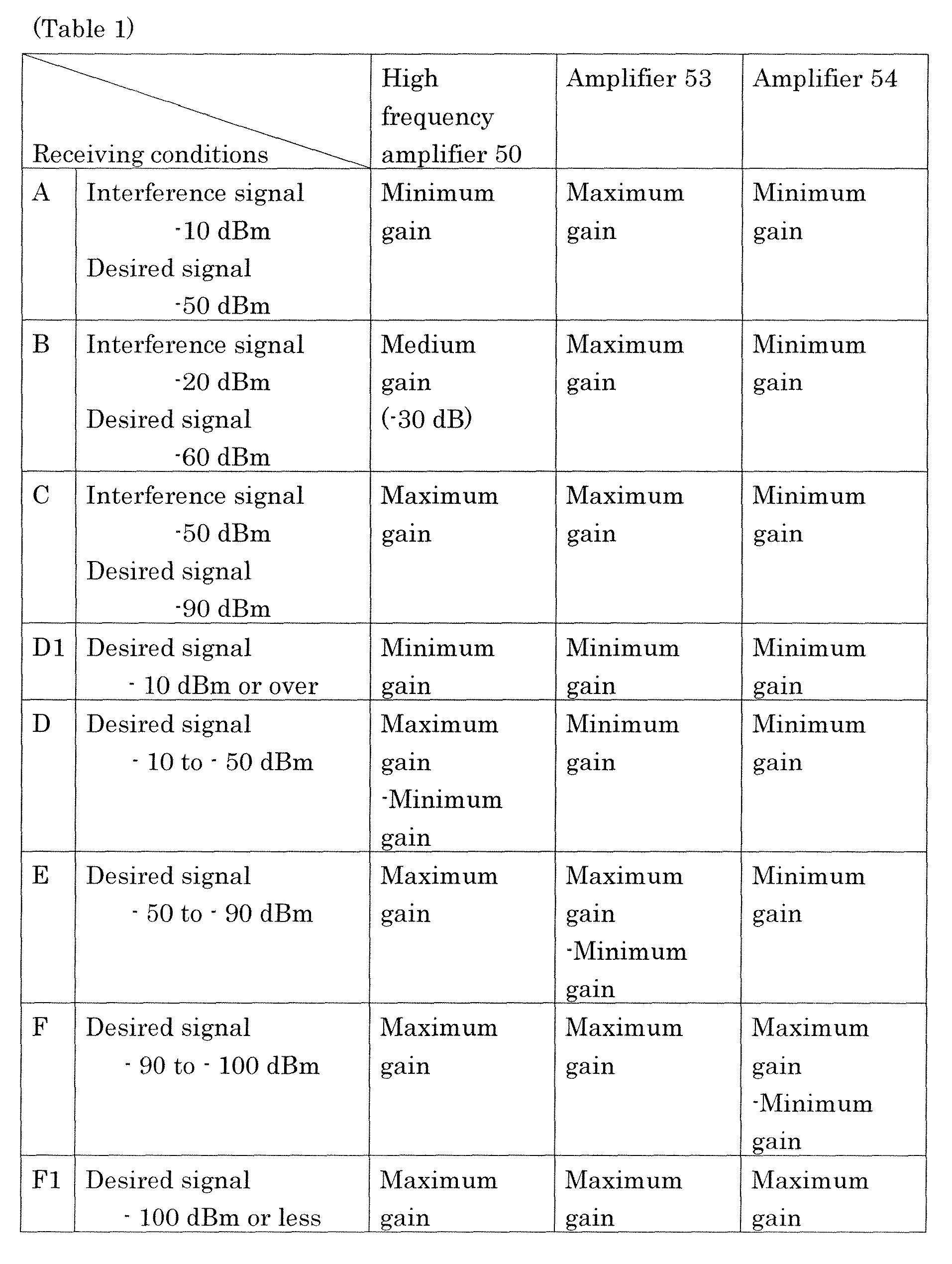

In receiving condition A, interference signal of - 10 dBm and desired signal of - 50 dBm are inputted to input terminal 35. Interference signal of - 10 dBm and desired signal of - 50 dBm are inputted to high frequency amplifier 50. The gain control range of high frequency amplifier 50 is - 10 dBm to - 50 dBm (value at input terminal 35). In high frequency amplifier 50 to which interference signal of - 10 dBm is inputted, the amount of gain control is 40 dB that is minimum gain obtained by subtracting the gain control of - 50 dBm from the interference signal of - 10 dBm.

The interference signal output from high frequency amplifier 50 is greatly attenuated by filter 52, and the desired signal output from high frequency amplifier 50 is inputted to amplifier 53. The desired signal inputted to amplifier 53 is - 90 dBm (value at input terminal 35) obtained by subtracting the amount of gain control 40 dB from desired signal - 50 dBm. The gain control range of amplifier 53 is - 50 dBm to - 90 dBm (value at input terminal 35). Therefore, the gain of amplifier 53 is maximum gain due to the gain control voltage of gain controller 53b.

Further, the gain-controlled output signal from amplifier 53 is inputted to amplifier 54. The desired signal inputted to amplifier 54 is - 90 dBm (value at input terminal 35). The gain control of amplifier 54 is - 90 dBm or less (value at input terminal 35). Therefore, obtained in amplifier 54 is minimum gain due to the gain control voltage of gain controller 54b.

Next, in receiving condition B, interference signal of - 20 dBm and desired signal of - 60 dBm are inputted to input terminal 35. Interference signal of - 20 dBm and desired signal of - 60 dBm are inputted to high frequency amplifier 50. The gain control range of high frequency amplifier 50 is - 10 dBm to - 50 dBm (value at input terminal 35). In high frequency amplifier 50 to which interference signal of - 20 dBm is inputted, the amount of gain control is 30 dB that is medium gain obtained by subtracting the gain control of - 50 dBm from the interference signal of - 20 dBm.

The interference signal output from high frequency amplifier 50 is greatly attenuated by filter 52, and the desired signal output from high frequency amplifier 50 is inputted to amplifier 53. The desired signal inputted to amplifier 53 is - 90 dBm obtained by subtracting the amount of gain control 30 dB from desired signal - 60 dBm (value at input terminal 35). The gain control range of amplifier 53 is - 50 dBm to - 90 dBm (value at input terminal 35). Therefore, the gain of amplifier 53 is maximum gain due to the gain control voltage of gain controller 53b.

Further, the gain-controlled output signal from amplifier 53 is inputted to amplifier 54. The desired signal inputted to amplifier 54 is - 90 dBm (value at input terminal 35). The gain control range of amplifier 54 is - 90 dBm or less (value at input terminal 35). Therefore, the gain of amplifier 54 is minimum gain due to the gain control voltage of gain controller 54b.

Next, in receiving condition C, interference signal of - 50 dBm and desired signal of - 90 dBm are inputted to input terminal 35. Interference signal of - 50 dBm and desired signal of - 90 dBm are inputted to gain controller 50b, and the gain control voltage output from gain controller 50b is inputted to gain control input 50a. Therefore, the gain of high frequency amplifier 50 is maximum gain. Further the interference signal output from mixer 51 is mainly greatly attenuated by filter 52.

On the other hand, the desired signal of - 90 dBm (value at input terminal 35) is outputted from high frequency amplifier 50 obtaining maximum gain. Further, the desired signal of - 90 dBm (value to input terminal 35) is inputted to amplifier 53. The gain of amplifier 53 is maximum gain due to gain controller 53b. Further, the desired signal of - 90 dBm (value at input terminal 35) is inputted to amplifier 54. The gain of amplifier 54 is minimum gain due to gain controller 54.

In the case of receiving condition C where the interference signal of - 50 dBm and desired signal of - 90 dBm are inputted to the input terminal, the receiving quality is not deteriorated because the level of interference signal is as low as - 50 dBm.

Next, in receiving condition D, only desired signal of - 10 to - 50 dBm is inputted to input terminal 35. Desired signal of - 10 to - 50 dBm is inputted to high frequency amplifier 50. The gain control range of high frequency amplifier 50 is - 10 dBm to - 50 dBm (value at input terminal 35). Therefore, due to the gain control voltage of gain controller 50b, the gain of high frequency amplifier 50 is minimum gain ~ maximum gain.

The gain-controlled output signal from high frequency amplifier 50 is inputted to amplifier 53. The desired signal inputted to amplifier 53 is - 90 dBm (value at input terminal 35). The gain control range of amplifier 53 is - 50 dBm to - 90 dBm (value at input terminal 35). Therefore, the gain of amplifier 53 is minimum gain due to the gain control voltage of gain controller 53b.

Further, the gain-controlled output signal from amplifier 53 is inputted to amplifier 54. The desired signal inputted to amplifier 54 is 90 dBm (value at input terminal 35). The gain control range of amplifier 54 is - 90 dBm or less (value at input terminal 35). Therefore, the gain of amplifier 54 is minimum gain due to the gain control voltage of gain controller 54b.

In receiving condition D1, only the desired signal of - 10 dBm is inputted to input terminal 35. That is, it is included in receiving condition D.

Next, in receiving condition E, only the desired signal of - 50 to - 90 dBm is inputted to input terminal 35. The desired signal of - 50 to - 90 dBm is inputted to high frequency amplifier 50. The gain control range of high frequency amplifier 50 is 0 dBm to - 50 dBm (value at input terminal 35), the gain of high frequency amplifier 50 is maximum gain.

The desired signal output from amplifier 50 is inputted to amplifier 53. The gain control range of amplifier 53 is - 50 dBm to - 90 dBm (value at termial 35). Therefore, the gain of amplifier 53 is minimum gain ~ maximum gain due to the gain control voltage of gain controller 53b.

Further, the desired signal output from amplifier 53 is inputted to amplifier 54. The gain control range of amplifier 54 is - 90 dBm or less (value at input terminal 35). Therefore, the gain of amplifier 54 is minimum gain due to the gain control voltage of gain controller 54b.

Next, in receiving condition F, only the desired signal of - 90 dBM to - 100 dBm is inputed to input terminal 35. The desired signal of - 90 dBm to - 100 dBm is inputted to high frequency amplifier 50. Since the gain control range of high frequency amplifier 50 is 0 dBm to - 50 dBm (value at input terminal 35), the gain of high frequency amplifier 50 is maximum gain.

The desired signal output from high frequency amplifier 50 is inputted to amplifier 53. The gain control range of amplifier 53 is - 50 dBm to - 90 dBm (value at input terminal 35). Therefore, the gain of amplifier 53 is maximum gain due to the gain control voltage of gain controller 53b.

Further, the desired signal output from amplifier 53 is inputted to amplifier 54. The gain control range of amplifier 54 is - 90 dBm or less (value at input terminal 35). Therefore, the gain of amplifier 54 is minimum gain due to the gain control voltage of gain controller 54b.

In receiving condition F1, only the desired signal of around - 110 dBm is inputted to input terminal 35. Therefore, all the gains of high frequency amplifiers 50, 53, 54 are maximum gains.

As described above, for example, in receiving condition D, E, F where only the desired signal is inputted, the gain control voltage output from gain controller 50b, 53, 54b varies in accordance with the level of desired signal.

That is, in the case of desired signal - 90 dBm or less (value at input terminal 35), the gain control voltage of gain controller 54b changes to maximum gain ~ minimum gain. Further, in the case of desired signal - 50 to - 90 dBm (value at input terminal 35), the gain control voltage of gain controller 53b changes to maximum gain ~ minimum gain. And, in the case of desired signal - 10 to - 50 dBm (value at input terminal 35), the gain control voltage of gain controller 50b changes to maximum gain ~ minimum gain.

On the other hand, in receiving condition A where interference signal - 10 dBm and desired signal - 50 dBm are inputted, or in receiving condition B where interference signal - 20 dBm and desired signal - 60 dBm are inputted, the gains of high frequency amplifier 50 become minimum gain and medium gain respectively due to the high level of interference signal, while the gain of amplifier 53 is maximum gain.

Thus, in each of receiving conditions C, D, E, F, as the level of desired signal being the received signal becomes higher, the gain control is performed in the order of amplifiers 54, 53, 50. On the other hand, in receiving condition A, B, as the level of interference signal becomes higher, the gain control is performed in the order of high frequency amplifiers 50, amplifier 53.

As is obvious in the above description, the gain control voltage of high frequency amplifier 50 and the gain control voltage of amplifier 53 are compared and detected by receiving quality detector 33, and thereby, the respective differences between receiving conditions C, D, E, F and receiving conditions A, B, D1, F1 can be detected.

That is, in receiving conditions C, D, E, F, the gain of amplifier 53 is set to same or smaller gain as compared with the gain of high frequency amplifier 50. Also, the difference in receiving conditions C, D, E, F is such that high frequency amplifier 50 and amplifier 53 are different from each other in gain control amount. Further, the difference in receiving conditions A, B is such that high frequency amplifier 50 and amplifier 53 are different from each other in gain control amount.

Accordingly, the receiving condition can be detected in accordance with the difference in gain control voltage corresponding to the gain control amount of high frequency amplifier 50 and amplifier 53.

In the case of detecting the receiving condition, it is preferable to use the gain control voltage by which high frequency amplifier 50, amplifiers 53, 54 are controlled. In this way, it is possible to correctly detect the levels of desired signal and interference signal.

Further, in the case of detecting the receiving condition, it is preferable to use both of the gain control voltage by which high frequency amplifier 50, amplifiers 53, 54 and the gain control voltage by which high frequency amplifier 64, amplifiers 67, 68 are controlled. Thus, it is possible to select a tuner of good receiving quality by comparing the gain control voltage of tuner 31 or 32.

Further, receiving quality detector 33 is provided with reference voltage input terminal 21a. The upper limit value and the lower limit value of the reference voltage value can be inputted from the reference voltage input terminal 21a. Accordingly, the standard voltage value of receiving quality detector 33 can be easily externally set in accordance with the gain share and interference characteristic in tuner 31, 32.

As described above, receiving conditions C, D, E, F of good receiving quality and receiving conditions A, B, D1, F1 of gad receiving quality can be detected by receiving quality detector 33 by using the gain control voltage by which high frequency amplifier 50 and amplifier 53 are controlled. Due to diversity controller 83 to which the detection signal is inputted, it is possible to realize single receiving in receiving conditions C, D, E, F of good receiving quality, and diversity receiving in receiving conditions A, B, D1, F1 of bad receiving quality.

In this way, receiving quality is detected by using receiving quality detector 33 which compares and detects each gain control voltage. The gain control voltage is very excellent in follow-up characteristic for detection with voltage even in case the receiving condition changes during mobile receiving.

Accordingly, for example, even in case of high-speed travel during which time the receiving condition changes every second, it is possible to smoothly perform the changeover between single receiving and diversity receiving without affecting the receiving quality.

It is preferable to insert A/D converter (analog digital converter) (not shown) for converting voltage to digital between gain controller 50b, 53b, 54b and the receiving quality detector, and to process the signal of digital value outputted from the A/D converter by using I²C bus line. In this case, the wiring is simplified because it is possible to process the signal by using a common I²C bus line.

Further, in the preferred embodiment 1 of the present invention, as an example, BER input from error corrector 81 is inputted to BER detector 82, but it is also preferable to use C/N detector (not shown) capable of detecting C/N value in place of BER detector 82.

Furthermore, in the preferred embodiment 1, the gain control voltages from two tuners, tuners 31, 32 are detected by receiving quality detector 33, but it is also preferable to use n (n is natural number, 3 or over) pieces of tuners and to connect the gain control voltages of n pieces of tuners to a receiving quality detector (not shown) for the detection of receiving quality.

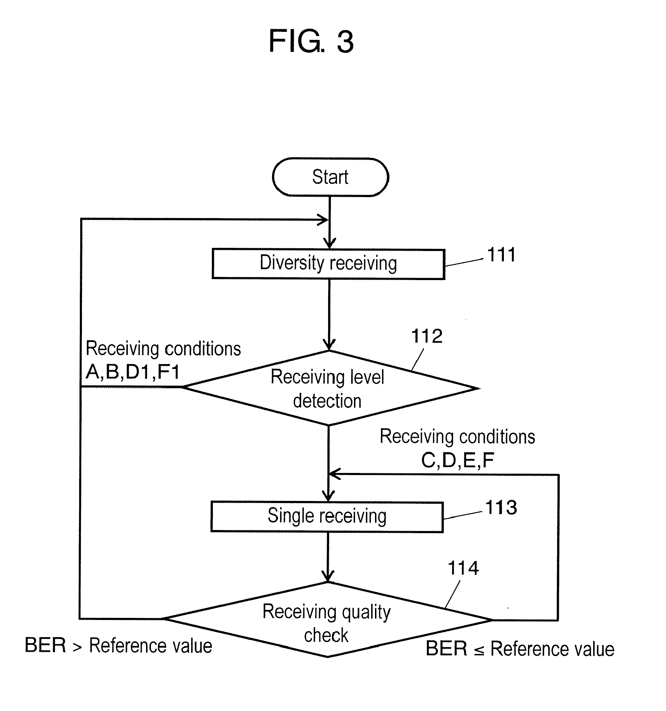

Fig. 3 is a flow chart showing the operation of selection by diversity controller in the high-frequency signal receiving apparatus in the preferred embodiment 1 of the present invention. That is, the flow chart shows the method of selecting single receiving and diversity receiving by diversity controller 83 of high-frequency signal receiving apparatus 20.

In Fig. 3, first at start of signal receiving, diversity receiving is executed in diversity receiving step S111. In signal level detection step S112, the receiving condition can be detected by receiving quality detector 33 with use of the gain control voltages of high frequency amplifier 50, amplifier 53, 54, or high frequency amplifier 64, amplifier 67, 68.

As a result of the detection, in the case of receiving condition A, B, D1, F1, it returns to diversity receiving step S111 to execute diversity receiving. On the other hand, in the case of receiving condition C, D, E, F, it goes to single receiving step S113 to execute single receiving.

During the single receiving, it goes to receiving quality detection step S114, and diversity controller 83 detects the receiving quality by using the detection signal of BER detector 82 or diversity section 80. When the receiving quality is good, it returns to the single receiving in single receiving step S113. On the other hand, when the receiving quality is bad, it returns to diversity receiving step S111.

In this case, the detection standard in receiving quality detector 33 used in signal level detection step S112 is to be set stricter than the detection standard in BER detector 82 or diversity section 80 used in receiving quality detection step S114.

This is because the detection accuracy of receiving quality detector 33 is rather lower than the detection accuracy of BER detector 82 or diversity section 80. However, the detection time of receiving quality detector 33 is faster as compared with the detection time of BER detector 82 or diversity section 80.

Because of the operation as described above, it is possible to instantaneously detect the receiving quality by using gain control voltages outputted from gain controllers 50b, 53b, 54b or gain controllers 64b, 67b, 68b respectively. Accordingly, single receiving and diversity receiving can be smoothly changed over even when the receiving condition changes during high-speed travel.

As to the input to gain controller 50b, 64b, it is preferable to connect the output of filter 52, 66 instead of connecting the output of mixer 51, 65. In this case, since the interference signal is suppressed by filter 52, 66, the influence of interference signal is suppressed for gain control in high frequency amplifier 50, 64.

Further, as to the input to gain controller 53b, 67b, it is preferable to connect the output of filter 56, 70 respectively. In this case, since the interference signal can be suppressed by filter 56, 70, the influence of interference signal is suppressed for gain control in high frequency amplifier 54,68.

Furthermore, in tuners 31, 32, mixers 51, 65 are used in single super, but same effects can be obtained even in case of using them in direct conversion. Thus, in the case of direct conversion, the frequency after direct conversion becomes a low frequency signal of I, Q signal. That is, the signal is processed at a low frequency, and it becomes easier to integrate the circuit. Also, interference with other signals hardly takes place.

As the receiving condition, not only in the relationship between the signal levels of digital broadcasting signal and analog broadcasting signal, but also in the relation of digital broadcasting signal levels with each other or the relation of digital broadcasting signal levels with each other, the effects of preferred embodiment 1 remain unchanged.

The high-frequency signal receiver of the present invention is able to smoothly perform the changeover between single receiving and diversity receiving, and it can be applied to mobile portable equipment and the like.

## Claims

1. A high-frequency signal receiver, comprising:
a first tuner and a second tuner for performing diversity control,
wherein the first tuner includes:
a first input terminal supplied with TV broadcasting signal;
a first high frequency amplifier connected with signal from the first input terminal and also provided with a first gain control input;
a first mixer supplied with output from the first high frequency amplifier to one input thereof;
a first oscillator connected to the other input of the first mixer;
a first amplifier supplied with output from the first mixer and also provided with a second gain control input;
a first filter supplied with output from the first mixer;
a first demodulator supplied with output from the first filter;
a first output terminal supplied with signal from the first demodulator;
a first gain controller connected between the output of the first mixer and the first gain control input; and
a second gain controller connected between the output of the first amplifier and the second gain control input,
the second tuner includes:
a second input terminal supplied with TV broadcasting signal;
a second high frequency amplifier connected with signal from the first input terminal and also provided with a third gain control input;
a second mixer supplied with output from the second high frequency amplifier to one input thereof;
a second oscillator connected to the other input of the second mixer;
a second filter supplied with output from the second mixer;
a second amplifier supplied with output from the second filter and also provided with a fourth gain control input;
a second demodulator supplied with output from the second amplifier;
a second output terminal supplied with signal from the second demodulator;
a third gain controller connected between the output of the second mixer and the third gain control input; and
a fourth gain controller connected between the output of the second amplifier and the fourth gain control input, and
the high frequency signal receiver further comprises:
a receiving quality detector to which each output of the first gain controller, the second gain controller, the third gain controller, and the fourth gain controller is connected; and
a third output terminal to which detection signal from the receiving quality detector is outputted, and
single receiving or diversity receiving is selected according to the detection signal outputted from the third output terminal.

2. The high-frequency signal receiver of claim 1, wherein the receiving quality detector is connected with the outputs of the first gain controller, the second gain controller, the third gain controller, and the fourth gain controller, and thereby, one tuner of good receiving quality is selected out of the first tuner and the second tuner.

3. The high-frequency signal receiver of claim 1, wherein the receiving quality detector further includes a reference voltage input terminal capable of inputting first reference voltage and second reference voltage, and
the outputs of the first gain controller and the third gain controller are respectively compared with the first reference voltage and the second reference voltage for the purpose of detection.

4. The high-frequency signal receiver of claim 1, wherein the receiving quality detector further includes a reference voltage input terminal capable of inputting first reference voltage and second reference voltage, and
the output of the first gain controller and the output of the third gain controller are compared with each other for the purpose of detection.

5. The high-frequency signal receiver of claim 1, wherein gain control voltages outputted from the first gain controller, the second gain controller, the third gain controller, and the fourth gain controller are converted to digital signals by respective digital-analog converters, and the digital signal is inputted to the receiving quality detector by using I² C bus line.

6. The high-frequency signal receiver of claim 1, wherein the first mixer and the second mixer are of direct conversion.

7. The high-frequency signal receiver of claim 1, wherein the first tuner and the second tuner are n (n is natural number, 3 or over) pieces of tuners, and
gain control voltages of the n pieces of tuners are connected to the receiving quality detector.

8. A high-frequency signal receiving apparatus, further comprising:
a diversity section connected with outputs from the first demodulator and the second demodulator of the high-frequency signal receiver of claim 1, which also selects or synthesizes signals from the first demodulator and the second demodulator;
an error corrector to which the output of the diversity section is connected;
an output terminal to which signal from the error corrector is outputted; and
a diversity controller for controlling the operation of the first tuner and the second tuner, to which control signal outputted from the diversity section is inputted.

9. The high-frequency signal receiving apparatus of claim 1, wherein the output of the first filter instead of the output of the first mixer is connected to the input of the first gain controller, and
the output of the second filter instead of the output of the second mixer is connected to the input of the second gain controller.

10. A high-frequency signal receiving apparatus,
wherein the first demodulator of the high-frequency signal receiver of claim 1 comprises:
a first A/D converter supplied with output of a first amplifier;
a third filter supplied with output of the first A/D converter; and
a first demodulator supplied with output of the third filter, and
a third amplifier is inserted between the output of the first amplifier and the input of the first A/D converter,
a fifth gain controller is disposed between the input of the first demodulator and the fifth gain control input of the third amplifier, and
the second demodulator of the high-frequency signal receiver of claim 1 comprises:
a second A/D converter supplied with output of a second amplifier;
a fourth filter supplied with output of the second A/D converter; and
a second demodulator supplied with output of the fourth filter, and
a fourth amplifier is inserted between the output of the second amplifier and the input of the second A/D converter,
a sixth gain controller is disposed between the input of the second demodulator and the sixth gain control input of the fourth amplifier, and
the receiving quality detector is further connected with the fifth gain control input and the sixth gain control input.

11. The high-frequency signal receiving apparatus of claim 9,
wherein the second gain control input is connected with output of the fifth gain controller in place of output of the second gain controller, and
the fourth gain control input is connected with output of the sixth gain controller in place of output of the fourth gain controller.
